# EUROPÄISCHE PATENTSCHRIFT

(11) **EP 0 573 802 B1**
(45) Veröffentlichungstag und Bekanntmachung des Hinweises auf die Patenterteilung: **10.12.2003**
(21) Anmeldenummer: 93107775.4
(22) Anmeldetag: 13.05.1993
(51) Int. Cl.: G01F 1/06, G01F 1/08

(54) **Wasserzähler**
water meter
Compteur d'eau

(30) Priorität: 06.06.1992 DE 4218812
(43) Veröffentlichungstag der Anmeldung: 15.12.1993
(73) Patentinhaber: Invensys Metering Systems GmbH Ludwigshafen, 67063 Ludwigshafen (DE)
(72) Erfinder: Lang, Gerhard, W-6701 Birkenheide (DE)
(74) Vertreter: Patentanwälte Möll und Bitterich

(56) Entgegenhaltungen:
- EP-A- 0 045 588
- EP-A- 0 414 127
- DE-A- 2 904 048
- DE-A- 3 104 134
- DE-A- 4 020 533
- DE-U- 7 400 445
- Aufsatz "Grundsätzliches über Hauswasserzähler" von Franz Himmler, München "Neue DELIWA-Zeitschrift" vom 01. Juli 1958, S. 231 - 237
- Aufsatz "Problemkreis Wohnungswasserzähler" von Dipl.-Ing. Gerd Feldtmann in "DVGW-Schriftenreihe Gas/Wasser Nr. 13" 1989, S. 219 - 226
- "Taschenbuch der Wasserversorgung", 11., überarbeitete und aktualisierte Auflage, erschienen 1995 im Verlag Franckh-Kosmos, S. 358 - 367
- Amtsblatt der Europäischen Gemeinschaften, 18. Jahrgang, Nr. L 14 vom 20. Januar 1975, enthaltend die Verordnung VO 75/33/EWG "Richtlinie des Rates vom 17. Dezember 1974 zur Angleichung der Rechtsvorschriften der Mitgliedsstaaten über Kaltwasserzähler"
- PTB-Anforderungen "Volumenmessgeräte für Kaltwasser", PTB-A 6.1 vom April 1988
- Aufsatz "Die wirtschaftliche Bedeutung des Leckproblems" von Herrn Bauamtmann Bauer, Regensburg in "Neue DELIWA-Zeitschrift" vom 01. August 1957, S. 267 - 269
- Aufsatz "Messung des Haushaltswasserverbrauchs durch Wohnungswasserzähler" von Dipl.-Ing., K. Möhlen, Gelsenkirchen aus "DVGW-Schriftenreihe Wasser" Nr. 74, Eschborn 1992, S. 323 - 336

## Beschreibung

Die Erfindung betrifft Flüssigkeitszähler, insbesondere Wasserzähler für vertikalen Einbau nach dem Einstrahl- oder Mehrstrahlprinzip gemäß dem Oberbegriff des Anspruchs 1.

Flüssigkeitszähler, insbesondere Wasserzähler, nach dem Einstrahl- oder Mehrstrahlprinzip, bei denen ein Flügelrad in einer etwa zylindrischen Meßkammer rotiert, sind in Millionen Stückzahlen weltweit im Einsatz. Sie sind geeicht bzw. beglaubigt. Die Eichung bzw. Beglaubigung gilt jeweils für eine bestimmte Zeitdauer, bei Wasserzählern beispielsweise in Deutschland 6 Jahre. Während der Eichdauer muß der Flüssigkeitszähler den tatsächlichen Verbrauch innerhalb bestimmter Fehlergrenzen anzeigen.

Die Zulassung, Eichung bzw. Beglaubigung erfolgt nach bestimmten metrologischen Klassen. Während bei großen Durchflüssen die metrologischen Klassen A, B und C gleiche Fehlergrenzen aufweisen, stellt die metrologische Klasse A bei kleinen Durchflüssen zwischen Q_{Trenn} und Qₘᵢₙ die geringsten Anforderungen, die metrologische Klasse C dagegen die höchsten Anforderungen an die Meßgenauigkeit und Meßempfindlichkeit. Es versteht sich, daß die Versorgungsunternehmen, beispielsweise die das Trinkwasser Liefernden Wasserwerke, die Verwendung von Flüssigkeitszählern der metrologischen Klasse C anstreben, um auch kleinste Durchflüsse, beispielsweise tropfende Wasserhähne, noch erfassen zu können.

Die Flügelräder von EinstrahL- und Mehrstrahlzählern besitzen eine Welle, die mit Hilfe je eines Lagers an beiden Enden im sogenannten Meßbecher gelagert ist. Diese Lager bestehen aus einer konischen Lagerspitze, beispielsweise aus Stahl, und einer ebenfalls konischen Lagerschale, beispielsweise aus Saphir. Die Welle sitzt mit einem wenn auch geringen Spiel zwischen den festen Lagerstellen.

Bei Flüssigkeitszählern unterscheidet man zwischen Trockenläufer, Teiltrockenläufer und Naßläufer. Beim Trockenläufer sitzt direkt auf der Flügelradwelle ein Dauermagnet, der die Drehung des Flügelrades durch eine druckfeste Wand hindurch auf einen zweiten Magneten überträgt, der seinerseits mit dem Zählwerk gekoppelt ist. Durch das magnetische Feld entstehen sowohl axiale als auch radiale Reibmomente. Trockenläufer können daher im allgemeinen in horizontaler Einbaulage, d. h. bei vertikaler Welle des Flügelrades, nur die Klasse B und in vertikaler Einbaulage, d. h. bei horizontaler Welle des Flügelrades, nur die Klasse A erfüllen.

Beim TeiLtrocken- und Naßläufer dagegen ist die Belastung der Flügelradlager erheblich geringer. Je nach dem, ob das Flügelrad spezifisch schwerer oder leichter ist als die Meßflüssigkeit, erfährt es einen Abtrieb oder einen Auftrieb. Ist der Flüssigkeitszähler horizontal eingebaut, wird bei kleinen Durchflüssen entweder das untere oder das obere Lager belastet. Infolge der konischen Form der Lagerelemente zentriert sich das Lager, Lagerreibung und Reibmoment werden minimal und das Flügelrad dreht sich auch bei kleinen Durchflüssen. Flügelradzähler mit horizontalem Einbau erfüllen daher in vielen Fällen die metrologische Klasse C.

Die DE-U 81 03 132 zeigt einen für Heizöl und Kraftstoffe bestimmten Flüssigkeitszähler mit einem flach-zylindrischen Meßrotor mit vertikaler Welle. Die Drehung des Meßrotors wird mit einer Lichtschranke berührungslos abgetastet. Um den Meßrotor auch ohne Welle und Wellenlager betreiben zu können, wird er aus einem Material gefertigt, dessen Artgewicht dem der zu messenden Flüssigkeit möglichst nahe kommt. Etwaige Differenzen werden durch Auftriebskammern oder Zusatzgewichte ausgeglichen.

Nachteilig ist bei dieser Konstruktion, daß elektrische Zusatzenergie benötigt wird für den Betrieb der Lichtschranke und die Auswertung der Signale. Eine übertragung des aus der DE-U 81 03 132 bekannten Prinzips auf handelsübliche Hauswasserzähler, bei denen die Drehzahl des Flügelrades über ein Zahnradgetriebe reduziert und in einem mechanischen Rollenzählwerk gespeichert wird, ist nicht möglich.

Betrachtet man Flüssigkeitszähler mit vertikalem Einbau, d. h. mit waagerecht liegender Flügelradwelle, so wird durch den resultierenden Auftrieb oder Abtrieb des Flügelrades in der Meßflüssigkeit die Mittelachse des Flügelrades gegenüber der Mittelachse der fixen Lagerelemente verlagert. Es entsteht so an beiden Lagern ein Reibmoment, das nicht nur die Drehung des Flügelrades bei kleinen Durchflüssen bremst, sondern auch zu einem erhöhten radialen Verschleiß spezieLL der Lagerspitzen führt, was wiederum eine Erhöhung der Reibung zur Folge hat.

Eine erste Konsequenz aus dem Geschilderten ist, daß ein Flüssigkeitszähler, der bei horizontalem Einbau die metrologische Klasse C erfüllt, bei vertikalem Einbau bestenfalls die metrologische Klasse B erfüllt. Eine zweite Konsequenz ist eine Reduzierung der Funktionsdauer.

Obwohl in der schon erwähnten DE-U 81 03 132 diese Probleme nicht angesprochen werden, versteht es sich, daß die dort zu anderen Zwecken vorgeschlagene Angleichung der spezifischen Gewichte von Meßflüssigkeit und Flügelrad die durch Auftrieb oder Abtrieb des Flügelrades in der Meßflüssigkeit ausgelösten zusätzlichen Reibmomente verschwinden. Ein Flüssigkeitszähler mit einem solchen Flügelrad müßte also auch bei sehr kleinen Durchflüssen entsprechend der metrologischen Klasse C anlaufen. überraschenderweise ist dies jedoch in den meisten Fällen nicht so.

Der vorliegenden Erfindung liegt daher die Aufgabe zugrunde, Flüssigkeitszähler der eingangs genannten Art dahingehend weiterzubilden, daß sie speziell bei kleinen Durchflüssen Leicht anlaufen und den Verbrauch mit höchster Genauigkeit, entsprechend der metrologischen Klasse C anzeigen, und zwar unabhängig davon, ob der Einbau horizontal, vertikal oder sonstwie erfolgt.

Diese Aufgabe wird gelöst durch ein gattungsgemäßes Flügelrad mit den Merkmalen gemäß Kennzeichen des Anspruchs 1.

Die vorliegende Erfindung geht von der Erkenntnis aus, daß trotz eines Abgleichs der spezifischen Gewichte von Flügelrad und Meßflüssigkeit die erhöhten Reibmomente in den Lagern der Flügelradwelle deswegen nicht verschwinden, weil insbesondere aufgrund der konstruktiven Gegebenheiten das Zentrum der am Flügelrad angreifenden Auftriebskräfte in aller Regel nicht mit dem Zentrum aller am Flügelrad angreifenden Abtriebskräfte zusammenfällt. Dadurch erleidet das eine Ende der Flügelradwelle einen Auftrieb, das andere Ende einen Abtrieb, so daß die beweglichen Lagerelemente gegenüber den fixen Lagerelementen wieder versetzt sind und die durch Auftrieb und Abtrieb ausgelösten Reibmomente das Leichte Anlaufen des Flügelrades verhindernden. Das wird jedoch durch die Erfindung verhindert.

Zur Erläuterung soll hier darauf hingewiesen werden, daß mit Schwerpunkt der Punkt des Flügelrades definiert wird, an dem die Zentren der sich gegenseitig aufhebenden Auftriebskräfte und Abtriebskräfte zusammenfallen.

In einem Naßläufer oder auch einem Teiltrockenläufer Laufen nicht nur das Flügelrad sondern auch die Räder des Reduziergetriebes, gegebenenfalls auch die Räder des Zählwerks in der Meßflüssigkeit und werden jeweils in zwei Lagern geführt. Gemäß einer bevorzugten Weiterbildung der Erfindung werden zur weiteren Reduzierung der Reibmomente in den Lagern die auf das Flügelrad angewendeten Maßnahmen - Angleichung der spezifischen Gewichte an das spezifische Gewicht der Meßflüssigkeit und Verlegung des Schwerpunktes in die Mitte zwischen die beiden Lager - ebenfalls angewendet. Dank dieser Maßnahmen wird die Summe aller Lagerreibmomente minimal und die Meßempfindlichkeit und - genauigkeit werden maximal, ebenso die Funktionsdauer.

Das erfindungsgemäße Prinzip Läßt sich mit verschiedenen technischen Maßnahmen verwirklichen, die teilweise seit Langer Zeit grundsätzlich bekannt sind, ohne daß ihre Bedeutung für die Lösung des ebenso Lange bekannten Problems erkannt worden wäre.

Gemäß einer ersten Ausgestaltung der Erfindung bestehen Flügelrad, Reduziergetriebe bzw. Zählwerk aus Materialien, deren spezifische Gewichte dem der Meßflüssigkeit entsprechen.

Alternativ oder in Kombination dazu kann auch wenigstens.ein den Auftrieb erhöhender Hohlraum vorgesehen sein. Dadurch kann das Gewicht der Lagerelemente, die z. B. aus Metall, schweren Kunststoffen oder Halbedelsteinen bestehen, kompensiert werden. Weiterhin dienen diese Maßnahmen dazu, unsymmetrische Materialverteilungen, die durch äußere Umstände bedingt sein können, so zu kompensieren, daß der Schwerpunkt exakt in der Mitte zwischen den beiden Lagern zu Liegen kommt.

Gemäß einer weiteren Ausgestaltung der Erfindung ist wenigstens ein den Abtrieb oder den Auftrieb erhöhender Zusatzkörper vorgesehen. Art und Größe dieses Zusatzkörpers wird bestimmt, indem zunächst der resultierende Auftrieb oder Abtrieb des Flügelrades, der Räder des Reduziergetriebes bzw. des Zählwerks bestimmt werden. Nachdem der so bestimmte Zusatzkörper angebracht ist, muß er noch so positioniert werden, daß der resultierende Schwerpunkt exakt in der Mitte zwischen den Lagern zu Liegen kommt. Hierzu ist der Zusatzkörper gemäß einer vorteilhaften Weiterbildung der Erfindung zur Längsachse der Welle verschieblich.

Es versteht sich, daß zur Vermeidung von Unwuchten des Flügelrades etwaige Hohlräume und Zusatzkörper rotationssymmetrisch gestaltet sein müssen.

Anhand der Zeichnung soll die Erfindung in Form eines Ausführungsbeispiels erläutert werden. Es zeigen
- Fig. 1: schematisch und im Teilschnitt ein Flügelrad in einem Flüssigkeitszähler mit vertikalem Einbau und
- Fig. 2: einen Längsschnitt durch einen Flüssigkeitszähler vom Naßläufer-Typ.

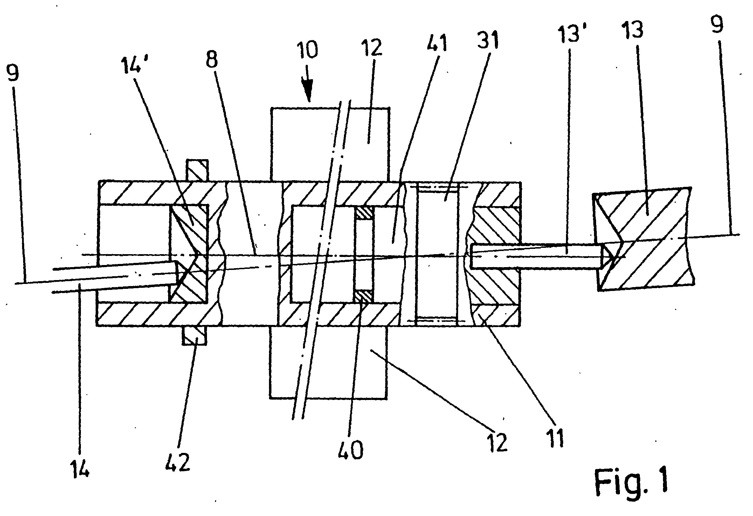

In Fig. 1 erkennt man ein Flügelrad 10 mit einer beispielsweise zylindrischen Flügelradwelle 11, an der Flügelpaletten 12 gleichmäßig verteilt sind. Die Flügelpaletten 12 werden von dem zu messenden Flüssigkeitsstrom tangential beaufschlagt, wodurch das Flügelrad 10 in Drehung versetzt wird.

Am einen Ende der Welle 11 erkennt man einen Lagerzapfen 13' mit einer konischen Spitze, der in einer ortsfesten Lagerpfanne 13 mit konischer Vertiefung geführt ist. Das andere Ende der Flügelradwelle 11 besitzt eine Innenbohrung, in der eine Lagerpfanne 14' mit konischen Vertiefungen positioniert ist. Als ortsfestes Lagerelement ist ein Achszapfen 14 mit konischer Spitze vorgesehen.

Aufgrund der konstruktiven Gegebenheiten ist der eine Teil der Flügelradwelle 11 erheblich Länger als der andere Teil. Außerdem trägt er ein Ritzel 31, das mit dem Reduziergetriebe, kämmt. Ein solches Flügelrad stellt somit ein völlig unsymmetrisches Gebilde dar.

Bei der zeichnerischen Darstellung wurde vorausgesetzt, daß das Linke Ende des Flügelrades 10 leichter, das rechte Ende desselben dagegen schwerer ist als die Meßflüssigkeit, so daß das Linke Ende einen Auftrieb, das rechte Ende einen Abtrieb erfährt und die Mittelachse 8 des Flügelrades 10 sich schräg zur Mittelachse 9 der ortsfesten Lagerelemente 13, 14 stellt. Infolgedessen berühren sich die Lagerzapfen 13', 14 und die zugehörigen Lagerpfannen 13, 14 jeweils außermittig. Es entstehen Reibungskräfte entsprechend der jeweiligen Auftriebs- bzw. Abtriebskraft, multipliziert mit dem Reibkoeffizienten der jeweiligen Materialpaarung, und infolge der Achsverschiebung auch ein entsprechendes Bremsmoment.

Fig. 1 zeigt auch konstruktive Möglichkeiten zur Beseitigung des Bremsmoments.

Die erste, in der Zeichnung allerdings nicht darstellbare Möglichkeit besteht in der Auswahl eines Kunststoffmaterials mit geeignetem spezifischem Gewicht. Bei Wasserzählern empfiehlt sich die Verwendung von Polypropylen, dessen spezifisches Gericht geringfügig kleiner ist als die von Wasser, so daß beispielsweise das Gewicht der Lagerelemente 13', 14' kompensiert wird.

Die zweite Möglichkeit ist der Einbau eines geschlossenen Hohlraums 41, der den Auftrieb erhöht.

Eine dritte Möglichkeit ist die Verwendung eines Zusatzkörpers 42, der je nach Anforderung aus einem den Auftrieb oder den Abtrieb erhöhenden Material bestehen kann. In Verbindung mit größeren Hohlräumen 41 empfiehlt sich üblicherweise die Verwendung von Zusatzkörpern, die den Abtrieb fördern.

Vierte Möglichkeit ist die Verwendung eines Zusatzgewichtes 40, hier beispielsweise im geschlossenen Hohlraum 41.

Um nun die in der Zeichnung dargestellte Schrägstellung der Flügelradwelle 11 zu beseitigen, werden Zusatzgewicht 40 bzw. Zusatzkörper 42 längs der Flügelradwelle 11 so weit verschoben, bis die Zentren von Auftrieb und Abtrieb im Schwerpunkt zusammenfallen und die Achse 8 der Flügelradwelle 11 exakt mit der Achse 9 der fixen Lagerelemente 13, 14 zusammenfällt. Dadurch verschwinden alle durch Auftrieb oder Abtrieb verursachten Kräfte auf die Lager 13, 13'; 14, 14' und die entsprechenden Reibmomente.

Es versteht sich, daß dieselben Prinzipien auch auf die Räder des Reduziergetriebes und das Zählwerk selbst angewendet werden können, so daß auch bei diesen die durch Auftrieb oder Abtrieb erzeugten Reibmomente verschwinden.

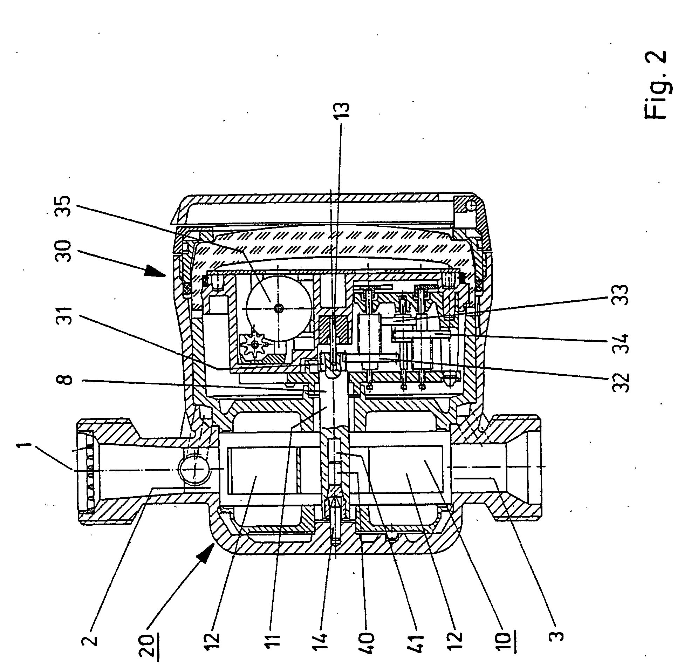

Fig. 2 zeigt einen Schnitt durch einen Einstrahl-Hauswasserzähler mit vertikalem Einbau, d. h. mit waagerecht Liegender Flügelradwelle 11. Das Längere Teil der Flügelradwelle 11 ragt in eine Zählwerkskammer 30 und das Ritzel 31 kämmt mit den Rädern 32, 33, 34 des Reduziergetriebes, die ihrerseits ein Rollenzählwerk 35 antreiben. Auch die Wellen der Zahnräder 32, 33, 34 und des Zählwerks 35 sind jeweils in Lagern geführt. Sind deren spezifische Gewichte an das der Meßflüssigkeit angeglichen und deren Schwerpunkte ebenfalls auf die Mitte zwischen den beiden Lagern justiert, verschwinden auch dort die Bremsmomente.

Ergebnis dieser Maßnahmen sind Flügelrad-Flüssigkeitszähler, die in jeder beliebigen Einbaulage, gleichgültig ob genormt oder nicht genormt, bei minimalsten Durchflüssen ansprechen und die höchste Genauigkeit der Durchflußmessung gemäß der metrologischen Klasse C erfüllen, wobei sich bei den mittleren und großen Durchflüssen keinerlei Unterschiede oder gar Nachteile gegenüber den handelsüblichen Lösungen ergeben.

## Patentansprüche

1. Wasserzähler für beliebigen Einbau, umfassend
- eine mit Wasser als Messflüssigkeit füllbare Messkammer (20) mit,
- wenigstens einer Einströmöffnung (2)
- und wenigstens einer Ausströmöffnung (3) für die Messflüssigkeit,
- darin ein Flügelrad (10) mit
- einer Welle (11),
- einer Anzahl von am Umfang der Welle (11) gleichmäßig verteilten Flügelpaletten (12)
- und je einem Lager (13, 13'; 14, 14') an den Enden der Welle (11),
- eine Zählwerkskammer (30), darin vom Flügelrad (10) angetrieben
- ein Zahnrad-Reduziergetriebe (32, 33, 34)
- und ein Zählwerk (35),
- die Welle (11) des Flügelrades (10) steht im wesentlichen senkrecht zur einströmenden Messflüssigkeit,
**gekennzeichnet durch** die Kombination der Merkmale:
- das spezifische Gewicht des Flügelrades (10) entspricht dem spezifischen Gewicht der Messflüssigkeit,
- das Flügelrad (10) ist so ausbalanciert, dass die Zentren der Auftriebskräfte und der Abtriebskräfte zusammenfallen.

2. Wasserzähler nach Anspruch 1, **gekennzeichnet durch** das Merkmal:
- es ist wenigstens ein den Auftrieb erhöhender Hohlraum (41) und/oder Zusatzkörper (42) vorgesehen.

3. Wasserzähler nach Anspruch 1 oder 2, **gekennzeichnet durch** das Merkmal:
- es ist wenigstens ein den Abtrieb erhöhender Zusatzkörper (40) vorgesehen.

4. Wasserzähler nach einem der Ansprüche 1 bis 3, **gekennzeichnet durch** die Merkmale:
- die Zählwerkskammer (30) ist mit Messflüssigkeit gefüllt,
- die Räder (32, 33, 34) des Reduziergetriebes und/oder des Zählwerks (35) sind ausbalanciert
- und das spezifische Gewicht der Räder (32, 33, 34) des Reduziergetriebes und/oder des Zählwerks (35) ist gleich dem spezifischen Gewicht der Messflüssigkeit.

5. Wasserzähler nach einem der Ansprüche 2 bis 4, **gekennzeichnet durch** das Merkmal:
- die Zusatzkörper (40, 42) sind zur Längsachse (8) des Flügelrades (10), der Räder (32, 33, 34) des Reduziergetriebes und/oder des Zählwerks (35) verschieblich.

## Claims

1. A water meter for any type of mounting, comprising
- a measuring chamber (20) which can be filled with water as the liquid to be measured, with
- at least one inflow opening (2)
- and at least one outflow opening (3) for the liquid being measured,
- an impeller (10) therein with
- a shaft (11),
- a number of vanes (12) evenly.distributed on the circumference of the shaft (11)
- a respective bearing (13,13';14,14') at the ends of the shaft (11),
- a counter mechanism compartment (30) and driven therein by the impeller (10)
- a toothed wheel reduction gear (32,33,34)
- and a counter mechanism (35),
- the shaft (11) of the impeller (10) is substantially perpendicular to the inflowing liquid being measured, **characterised by** a combination of the features:
- the relative density of the impeller (10) corresponds to the relative density of the liquid being measured,
- the impeller (10) is so balanced that the centres of the buoyancy forces and the output forces coincide.

2. A water meter according to Claim 1, **characterised by** the feature:
- at least one cavity (41) increasing the buoyancy and/or an additional member (42) is provided.

3. A water meter according to Claim 1 or 2, **characterised by** the feature:
- at least one additional member (40) increasing the output is provided.

4. A water meter according to any one of Claims 1 to 3, **characterised by** the features:
- the counter mechanism compartment (30) is filled with liquid being measured,
- the wheels (32,33,34) of the reduction gear and/or the counter mechanism (35) are balanced
- and the relative density of wheels (32,33,34) of the reduction gear and/or the counter mechanism (35) is equal to the relative density of the liquid being measured.

5. A water meter according to any one of Claims 2 to 4, **characterised by** the feature:
- the additional members (40,42) are displaceable relative to the longitudinal axis (8) of the impeller (10), of the wheels (32,33,34) of the reduction gear and/or of the counter mechanism (35).

## Revendications

1. Compteur d'eau pour un montage quelconque, comprenant
- une chambre de mesure (20) pouvant être remplie d'eau comme liquide de mesure avec,
- au moins une ouverture d'entrée (2)
- et au moins une ouverture de sortie ( 3) pour le liquide de mesure,
- à l'intérieur une roue à ailettes (10) avec
- un arbre (11),
- une quantité de palettes à ailettes (12) réparties uniformément à la périphérie de l'arbre (11)
- et un palier (13, 13'; 14, 14') sur chacune des extrémités de l'arbre (11),
- une chambre de comptage (30), à l'intérieur de laquelle sont entraînés par la roue à ailettes (10),
- un engrenage réducteur à roue dentée (32, 33, 34)
- et un compteur (35),
- l'arbre (11) de la roue à ailettes (10) étant sensiblement perpendiculaire au liquide de mesure entrant,
**caractérisé par** la combinaison des caractéristiques suivantes :
- le poids spécifique de la roue à ailettes (10) correspond au poids spécifique du liquide de mesure,
- la roue à ailettes (10) est équilibrée de façon à ce que les centres des forces ascensionnelles et des forces descensionnelles coïncident.

2. Compteur d'eau selon la revendication 1, **caractérisé par** la caractéristique suivante :
- il est prévu au moins un espace creux (41) et/ou un corps supplémentaire (42) pour augmenter la force ascensionnelle.

3. Compteur d'eau selon la revendication 1 ou 2,
**caractérisé par** la caractéristique suivante :
- il est prévu au moins un corps supplémentaire (40) augmentant la force descensionnelle.

4. Compteur d'eau selon l'une quelconque des revendications 1 à 3, **caractérisé par** les caractéristiques suivantes :
- la chambre de compteur (30) est remplie avec du liquide de mesure,
- les roues (32, 33, 34) de l'engrenage réducteur et/ou du compteur d'eau (35) sont équilibrées,
- et le poids spécifique des roues (32, 33, 34) de l'engrenage réducteur et/ou du compteur (35) est égal au poids spécifique du liquide de mesure.

5. Compteur d'eau selon l'une quelconque des revendications 2 à 4, **caractérisé par** la caractéristique suivante :
- les corps supplémentaires (40,42) peuvent être déplacés par rapport à l'axe longitudinal (8) de la roue à ailettes (10), des roues (32, 33, 34) de l'engrenage réducteur et/ou du compteur (35).
